# FASCICULE DE BREVET EUROPEEN

(11) **EP 2 545 330 B1**
(45) Date de publication et mention de la délivrance du brevet: **25.06.2014**
(21) Numéro de dépôt: 11712935.3
(22) Date de dépôt: 28.02.2011
(51) Int. Cl.: F25B 9/00

(54) **PROCEDE ET INSTALLATION DE REFRIGERATION EN CHARGE PULSEE**
VERFAHREN UND VORRICHTUNG FÜR KÜHLUNGEN MIT GEPULSTER LADUNG
METHOD AND EQUIPMENT FOR PULSED CHARGE REFRIGERATION

(30) Priorité: 12.03.2010 FR 1051784
(43) Date de publication de la demande: 16.01.2013
(73) Titulaire: L'Air Liquide Société Anonyme pour l'Etude et l'Exploitation des Procédés Georges Claude, 75007 Paris (FR)
(72) Inventeur: AIGOUY, Gérald, 73110 La Croix De La Rochette (FR); BERNHARDT, Jean-Marc, 38500 La Buisse (FR); BRIEND, Pierre, 38170 Seyssinet (FR); FAUVE, Eric, F- 84500 BOLLENE (FR); GRILLOT, David, 38140 Rives (FR); HELOIN, Vincent, 38360 Sassenage (FR)
(74) Mandataire: De Cuenca, Emmanuel Jaime
(86) Numéro de dépôt international: PCT/FR2011/050407
(87) Numéro de publication internationale: WO 2011/110768

(56) Documents cités:
- WO-A2-2009/024705
- DAUGUET P ET AL: "Using Dynamic Simulation to support Helium Refrigerator Process Engineering", 100 YEARS OF LIQUID HELIUM : PROCEEDINGS OF THE TWENTY-SECOND INTERNATIONAL CRYOGENIC ENGINEERING CONFERENCE AND INTERNATIONAL CRYOGENIC MATERIALS CONFERENCE 2008, ICEC 22 - ICMC 2008 ; SEOUL, KOREA, JULY 21 - 25, 2008, KR, 1 janvier 2009 (2009-01-01), pages 39-44, XP008128498, ISBN: 978-89-957138-2-2
- BRIEND P ET AL: "Dynamic simulation of a large scale and pulsed load helium refrigerator", INTERNET CITATION, 1 juillet 2009 (2009-07-01), page 1, XP007915622, Extrait de l'Internet: URL:http://www.sainc.com/cec-icmc09/techin div.asp?paperNumber=C3-N-02 [extrait le 2010-11-04]
- BRIEND P ET AL: "DYNAMIC SIMULATION OF A LARGE SCALE PULSED LOAD HELIUM REFRIGERATOR", ADVANCES IN CRYOGENIC ENGINEERING: TRANSACTIONS OF THE CRYOGENIC ENGINEERING CONFERENCE - CEC, AMERICAN INSTITUTE OF PHYSICS, US, vol. 55, 9 avril 2010 (2010-04-09), pages 1453-1459, XP007915623, ISBN: 978-0-7354-0761-9 [extrait le 2010-11-04]
- CLAUDET G ET AL: "Design of the ITER-FEAT cryoplant to achieve stable operation over a wide range of experimental parameters and operation scenarios", FUSION ENGINEERING AND DESIGN, ELSEVIER SCIENCE PUBLISHERS, AMSTERDAM, NL LNKD- DOI:10.1016/S0920-3796(01)00434-3, vol. 58-59, 1 novembre 2001 (2001-11-01), pages 205-209, XP004312882, ISSN: 0920-3796
- KALININ V ET AL: "ITER cryogenic system", FUSION ENGINEERING AND DESIGN, ELSEVIER SCIENCE PUBLISHERS, AMSTERDAM, NL LNKD- DOI:10.1016/J.FUSENGDES.2006.07.003, vol. 81, no. 23-24, 1 novembre 2006 (2006-11-01), pages 2589-2595, XP025115125, ISSN: 0920-3796 [extrait le 2006-11-01]

## Description

La présente invention concerne un procédé et une installation de réfrigération en charge pulsée.

L'invention concerne en particulier un procédé de réfrigération en charge pulsée d'un organe d'un « Tokamak», c'est-à-dire un organe d'une installation de génération intermittente d'un plasma, le procédé utilisant un dispositif de réfrigération soumettant un fluide de travail tel que de l'hélium à un cycle de travail comportant: une compression, un refroidissement et une détente, un échange thermique avec l'organe, un réchauffement, la puissance de réfrigération produite par le dispositif de réfrigération étant augmentée à un niveau relativement élevé lorsque le Tokamak est dans une phase de génération d'un plasma tandis que la puissance de réfrigération produite par le dispositif de réfrigération est diminuée à un niveau relativement bas lorsque le Tokamak n'est plus dans une phase de génération d'un plasma.

L'invention concerne plus particulièrement un procédé et une installation de réfrigération en charge pulsée d'un organe d'un Tokamak, c'est-à-dire un organe d'une installation de génération intermittente d'un plasma.

Un Tokamak (acronyme russe de « Toroidalnaya Kamera c Magnitnymi Katushkami » est une installation capable de produire les conditions physiques nécessaires pour obtenir une énergie de fusion. En particulier, un Tokamak produit de façon intermittente le plasma, c'est-à-dire un gaz ionisé qui conduit l'électricité.

Les besoins de réfrigération des Tokamak sont conditionnés par leur régime de fonctionnement fortement transitoire. Un Tokamak produit un plasma de façon ponctuelle, non continue et répétée. Les plasmas sont générés de façon cyclique à intervalles réguliers ou bien de façon aléatoire, à la demande.

Ce mode de fonctionnement nécessite un besoin en réfrigération dit en « charges pulsées ». C'est-à-dire qu'une puissance de réfrigération très importante est nécessaire pendant un temps bref (pendant la phase de génération du plasma). Cette forte demande de réfrigération est suivie d'une une période plus longue (jusqu'à la génération du plasma suivant) durant laquelle le besoin de puissance est plus faible.

Les réfrigérateurs de Tokamak sont donc conçus pour répondre à ce mode de fonctionnement. Ainsi, ces réfrigérateurs fonctionnent en mode dit « économiseur », qui consiste à produire une quantité d'hélium liquide pendant les phases d'attente entre les plasmas. L'hélium liquide produit est stocké dans une réserve qui sera consommée par ébullition pour refroidir un organe du Tokamak pendant les phases de génération de plasma.

Lorsque la période d'attente entre deux plasmas est suffisamment longue, le niveau maximum de remplissage de la réserve d'hélium liquide est atteint avant le plasma suivant. La puissance frigorifique du réfrigérateur peut alors être réduite ce qui constitue une économie d'énergie importante. Dans une solution classiquement mise en oeuvre, la puissance du réfrigérateur et réduite au minium via une baisse des pressions du cycle (c'est-à-dire une baisse du niveau de pression de compression de l'hélium dans son cycle de travail). La puissance du réfrigérateur peut également être diminuée ou augmentée en agissant sur débit de cycle lorsqu'un variateur de fréquence est disponible (c'est-à-dire que le débit d'hélium circulant dans le cycle de travail est sélectivement diminué ou augmenté).

Un réchauffeur est généralement prévu dans la réserve d'hélium liquide. Ce réchauffeur est activé de façon à consommer la puissance de réfrigération excédentaire, pour maintenir un niveau liquide constant ou au moins en dessous d'un seuil maximum.

Classiquement, la transition de régime de puissance (augmentation ou diminution de la puissance frigorifique produite) est pilotée en fonction de l'information de puissance d'activation du réchauffeur. C'est-à-dire que le signal électrique de commande du réchauffeur est interprété à l'aide d'une « courbe de chauffe » qui définie la consigne de pression du cycle, et/ou de fréquence du variateur de la station de compression du réfrigérateur.

Lorsqu'un nouveau plasma est généré, le réfrigérateur est commuté pour produire une puissance maximale de réfrigération soit manuellement (par un opérateur), soit en fonction de la variation de cette « courbe de chauffe » du réchauffeur.

Lorsque le plasma et terminé et que la puissance de réfrigération requise est moindre, le retour du réfrigérateur vers un régime produisant moins de puissance froide est généralement réalisé de façon automatique lorsque que la puissance du réchauffeur devient nulle.

Le document WO 2009/02740512 décrit un procédé de régulation de la puissance cryogénique fournie à un consommateur par un réfrigérateur, à partir d'une puissance de réfrigération produite par le réfrigérateur.

L'article << ITER cryogenic system >> auteurs Kalinin V.; Tada E.; Millet F. et Shatil N. in Fusion Engineering and Design, vol. 81, no. 23-24, pages 2589-2595 décrit un procédé de réfrigération en charge pulsée d'un organe d'un Tokamak.

Ces modes de fonctionnements sont globalement satisfaisants cependant, la consommation énergétique du réfrigérateur reste élevée.

Un but de la présente invention est de pallier tout ou partie des inconvénients de l'art antérieur relevés ci-dessus. En particulier, but de la présente invention est de proposer un procédé et une installation de réfrigération améliorés par rapport à l'art antérieur.

A cette fin, le procédé de réfrigération d'un organe d'un Tokamak selon l'invention, par ailleurs conforme à la définition générique qu'en donne le préambule ci-dessus, est essentiellement caractérisé en ce que l'augmentation de la puissance de réfrigération produite par le dispositif de réfrigération est déclenchée automatiquement en réponse à un signal produit lors d'une étape de démarrage d'un plasma dans le Tokamak.

L'invention permet ainsi de réguler de façon automatisée la puissance de réfrigération du réfrigérateur en minimisant la consommation d'hélium liquide. Comme cela sera décrit ci-après, l'invention permet de diminuer la consommation énergétique globale du réfrigérateur. L'invention permet notamment de diminuer la durée d'utilisation du réfrigérateur à sa puissance de réfrigération maximum.

Ceci peut être obtenu selon l'invention en anticipant l'arrivée d'un plasma avant que son effet ne soit ressenti sur la réserve d'hélium.

Par ailleurs, des modes de réalisation de l'invention peuvent comporter l'une ou plusieurs des caractéristiques suivantes :
- le signal est généré lors d'une modification prédéterminée d'un paramètre physique observable au niveau du Tokamak,
- le signal est généré lors d'une modification prédéterminée de l'un au moins des paramètres physiques suivants : une augmentation prédéterminée de la température interne du Tokamak, un signal de commande manuel ou automatique de commutation du Tokamak dans une phase de génération d'un plasma, un signal électrique de mesure de pression et/ou de courant électrique et/ou de tension électrique et/ou de champ magnétique, ou un signal issu d'un d'instrument de mesure de type optique tel qu'une camera ou des fibres,
- lorsque le Tokamak n'est plus dans une phase de génération d'un plasma, le procédé comporte au moins une période durant laquelle le dispositif de réfrigération liquéfie du fluide de travail et stocke du fluide liquéfié dans une réserve tampon, le niveau de fluide liquéfié dans une réserve étant maintenu en dessous d'un seuil via un réchauffeur sélectivement activable, lors du démarrage d'une phase de plasma, l'augmentation de la puissance de réfrigération produite par le dispositif de réfrigération intervenant avant une désactivation du réchauffeur et une baisse de niveau de liquide dans la réserve, c'est-à-dire que le signal de détection du démarrage d'une génération d'un plasma dans le Tokamak est antérieur à une désactivation du réchauffeur et une baisse de niveau de liquide dans la réserve résultant d'une vaporisation de fluide du fait du refroidissement de l'organe du Tokamak lors d'un plasma,
- la diminution de la puissance de réfrigération produite par le dispositif de réfrigération à un niveau bas est déclenchée automatiquement en réponse à une variation déterminée de la charge thermique de l'organe, c'est-à-dire une variation déterminée du besoin de réfrigération de l'organe,
- la diminution de la puissance de réfrigération produite par le dispositif de réfrigération est déclenchée automatiquement en réponse à l'un au moins parmi : un signal de détection d'une baisse déterminée de température dans une boucle de fluide assurant l'échange thermique entre l'organe et le fluide de travail, une remontée de niveau dans un stockage d'hélium liquide, un seuil d'ouverture d'un by-pass froid, un seuil de vitesse de turbine ou de compresseur froid,

L'invention peut concerner également une installation de réfrigération en charge pulsée d'un organe d'un « Tokamak», l'installation étant munie d'un dispositif de réfrigération comprenant un circuit formant un cycle de travail pour un fluide de travail tel que l'hélium, le circuit du dispositif de réfrigération comportant:
- une station de compression du gaz de travail munie d'au moins un compresseur,
- une boîte de pré-refroidissement/refroidissement comprenant au moins un échangeur de chaleur et au moins un organe de détente du gaz de travail sortant de la station de compression,
- un système d'échange thermique entre le fluide de travail refroidit et l'organe,
- un système de renvoi du fluide ayant échangé thermiquement avec l'organe vers la station de compression,
l'installation comprenant une logique électronique de pilotage du dispositif de réfrigération assurant une régulation de la puissance de réfrigération produite par ledit dispositif de réfrigération, pour augmenter ponctuellement cette puissance de réfrigération à un niveau relativement élevé lorsque le Tokamak est dans une phase de génération d'un plasma, l'installation étant caractérisée en ce que le Tokamak comprend un émetteur d'un signal de déclenchement à chaque démarrage d'une génération d'un plasma, la logique électronique comprenant un récepteur dudit signal de déclenchement pour commander automatiquement l'augmentation de la puissance de réfrigération produite par le dispositif de réfrigération à la réception de ce signal.

Par ailleurs, des modes de réalisation de l'invention peuvent comporter l'une ou plusieurs des caractéristiques suivantes :
- l'installation comprend un capteur mesurant la valeur d'un paramètre physique observable au niveau du Tokamak et représentatif du démarrage d'une génération d'un plasma, et en ce que ledit capteur envoie une information à l'émetteur en vue d'informer la logique électronique de pilotage,
- le capteur comprend au moins parmi : un capteur d'une température interne ou externe du Tokamak, un capteur de commutation de la commande manuel ou automatique de commutation du Tokamak d'une phase dite « de veille » vers une phase de génération d'un plasma, ou tout autre capteur électrique présent dans l'instrumentation du Tokamak,
- la boîte de pré-refroidissement/refroidissement comprend une réserve tampon de fluide liquéfié lors du cycle de travail, un réchauffeur sélectivement activable pour vaporiser une partie du fluide liquéfié de la réserve, un circuit d'échange thermique sélectif entre le fluide de la réserve et l'organe, l'installation comporte un capteur mesurant la charge thermique de l'organe, c'est-à-dire un capteur mesurant la valeur d'une grandeur représentative du besoin de réfrigération de l'organe à refroidir, le capteur mesurant la charge thermique de l'organe adressant un signal à la logique électronique de pilotage, ladite logique électronique de pilotage étant programmée pour diminuer la puissance de réfrigération produite par le dispositif de réfrigération à un niveau relativement bas en réponse à un signal de détection d'une baisse déterminée de la charge thermique de l'organe,
- le capteur mesurant la charge thermique de l'organe comprend l'un au moins parmi : un capteur de température dans une boucle de fluide assurant sélectivement l'échange thermique entre l'organe et le fluide de travail ,_un capteur de pression, une mesure de puissance électrique des réchauffeurs, une mesure de vitesse de turbines et/ou de compresseurs froids,
- ladite réserve tampon de liquide stocké étant prévue pour être consommée par ébullition par échange thermique avec l'organe lors d'une phase de génération d'un plasma,
- la variation de la puissance de réfrigération produite par le dispositif de réfrigération étant réalisée en modifiant la pression de cycle, c'est-à-dire le niveau de pression de la compression auquel le fluide de travail est soumis au cours du cycle de travail et/ou en modifiant le débit de cycle, c'est-à-dire le débit de fluide de travail circulant dans le cycle de travail,
- les variations de pression et de débit du cycle sont lissées par l'utilisation concomitante de la vanne de commande d'un by-pass froid, d'un stockage à température ambiante, et de la consommation d'hélium liquide de la capacité

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente de façon schématique et partielle la structure et le fonctionnement d'une installation de réfrigération d'un Tokamak selon l'invention,
- la figure 2 représente de façon schématique et partielle la structure et le fonctionnement d'une installation de réfrigération d'un Tokamak selon un autre exemple de réalisation de l'invention,
- la figure 3 représente, sur un même graphique, lors d'un plasma PA, les variations en fonction du temps t : de la pression de cycle P, de la charge T1 d'un organe du Tokamak à refroidir,
- la figure 4 représente sur un même graphique, lors d'un plasma PA, les variations en fonction du temps t : de la pression de cycle P, d'un by-pass froid B facultatif de l'installation de la figure 2,
- la figure 5 représente, sur un même graphique, les variations en fonction du temps t : de la pression de cycle P, de la pression moyenne de cycle Pm, du niveau N de liquide dans la réserve du réfrigérateur lors de deux phases de plasma PA successives pour une installation selon l'art antérieur,
- la figure 6 représente sur un même graphique, les variations en fonction du temps t : de la pression de cycle P, de la pression moyenne de cycle Pm, du niveau N de liquide dans la réserve du réfrigérateur lors de deux phases de plasma PA successives pour une installation selon l'invention.

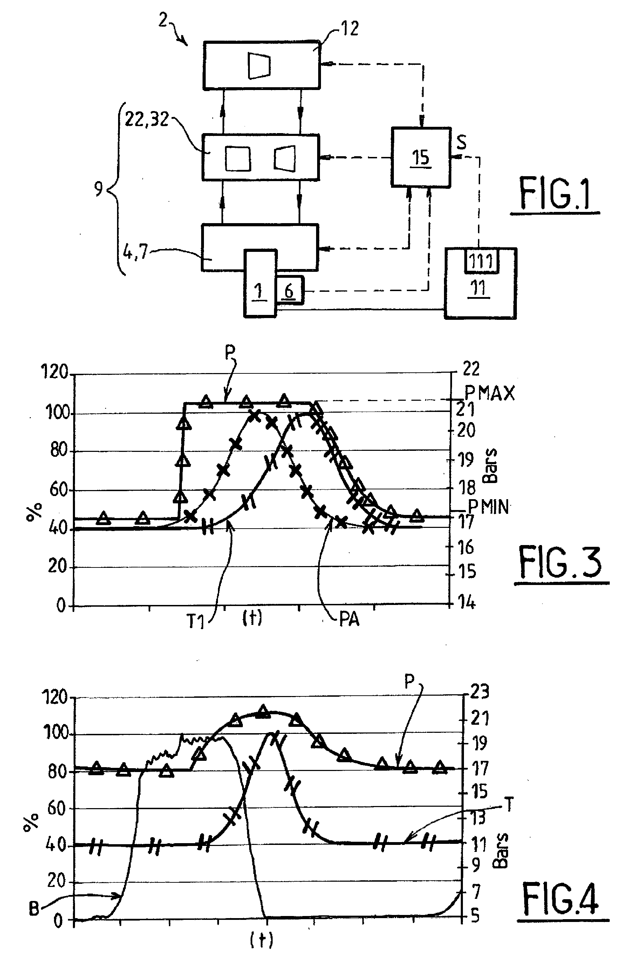

Le principe général de fonctionnement va à présent être décrit en référence à la figure 1.

L'installation de réfrigération schématisée à la figure 1 comprend classiquement un dispositif 2 de réfrigération comprenant un circuit soumettant un fluide de travail à un cycle de travail pour produire du froid. Par exemple, le fluide de travail comprend ou est constitué d'hélium. Par soucis de simplification, ce fluide de travail est désigné « hélium » dans la suite de la description.

Le circuit du dispositif de réfrigération 2 comprend une station 12 de compression munie d'au moins un compresseur 8 qui assure une compression de l'hélium. En sortie de la station de compression 2, l'hélium entre dans une boîte 32 de refroidissement (avec éventuellement une boîte 22 de pré-refroidissement). La boîte 22, 32 de refroidissement/pré-refroidissement comprend un ou plusieurs échangeurs qui échangent thermiquement avec l'hélium pour refroidir ce dernier.

La boîte 22, 32 de refroidissement/pré-refroidissement comprend une ou plusieurs turbines pour détendre l'hélium. De préférence, la boîte 22, 32 de refroidissement/pré-refroidissement fonctionne selon un cycle de type Brayton.

Au moins une partie de l'hélium est liquéfié à la sortie de la boîte 22, 32 de refroidissement/pré-refroidissement et un circuit 4, 7 est prévu pour assurer un échange thermique sélectif entre l'hélium liquide et un organe 1 à refroidir d'un Tokamak. L'organe 1 comprend par exemple un générateur de champ magnétique obtenu à l'aide d'un aimant supraconducteur et/ou une ou des unités de pompage par cryo-condensation.

Le circuit 4, 7 d'échange thermique peut comprendre, par exemple, un réservoir 4 stockant une réserve d'hélium liquéfié et des conduites 7 et un ou des échangeurs assurant un échange thermique indirect entre l'organe 1 et l'hélium liquide.

Au moins une partie de l'hélium réchauffé au cours de l'échange thermique avec l'organe 1 est renvoyé vers la station de compression. Lors du retour vers la station de compression 2, l'hélium peut céder des frigories aux échangeurs qui refroidissement l'hélium sortant de la station 12 de compression.

Lorsqu'un plasma est généré dans le tokamak 11, l'organe 1 a une charge thermique plus importante (c'est-à-dire un besoin de réfrigération plus important). La puissance de réfrigération du dispositif de réfrigération 2 doit donc être augmentée.

L'installation possède une logique 15 électronique de pilotage du dispositif 2 de réfrigération qui permet notamment de réguler la puissance de réfrigération produite par ledit dispositif 2 de réfrigération. En particulier, la logique 15 électronique permet d'augmenter ponctuellement cette puissance de réfrigération à un niveau relativement élevé (par exemple une réfrigération maximale) lorsque le Tokamak 11 est dans une phase de génération d'un plasma. De même, la logique 15 électronique commande la diminution de cette puissance de réfrigération à un niveau relativement bas (par exemple niveau minimal déterminé) lorsque le Tokamak 11 n'est plus dans une phase de génération d'un plasma.

La variation de la puissance de réfrigération produite par le dispositif 2 de réfrigération est réalisée classiquement en modifiant la pression P de cycle, c'est-à-dire le niveau de pression de la compression 12 auquel l'hélium est soumis au cours du cycle de travail.

La variation de la puissance de réfrigération produite par le dispositif 2 de réfrigération peut également être réalisée le cas échéant en modifiant le débit de cycle, c'est-à-dire en en modifiant le débit d'hélium circulant dans le cycle de travail.

Contrairement à l'art antérieur, l'installation selon l'invention ne déclenche pas l'augmentation de la puissance de réfrigération du dispositif 2 en réponse à une information sur la courbe de chauffe d'un réchauffeur de la réserve d'hélium liquide. Selon l'invention, cette commutation entre un mode de fonctionnement avec une puissance de réfrigération basse et un mode de fonctionnement avec une puissance de réfrigération haute est anticipée par rapport à l'information pertinente de la courbe de chauffe du réchauffeur.

En particulier, dans l'installation selon l'invention, le Tokamak 11 comprend un émetteur 112 d'un signal S lors d'un démarrage d'un plasma. Ce signal S est envoyé (par fil ou sans fil) à la logique 15 électronique. La logique 15 électronique peut comprendre à cet effet un récepteur dudit signal S. A la réception de ce signal S, la logique 15 électronique commande automatiquement l'augmentation de la puissance de réfrigération produite par le dispositif 2 de réfrigération.

Le signal S représentatif du démarrage d'un plasma dans le Tokamak est basé sur un paramètre physique observable au niveau ou en amont du Tokamak 11 (et non pas en aval du Tokamak 11 comme cela était le cas dans l'art antérieur).

Par exemple, et sans que ce soit limitatif, le paramètre physique pris en compte pour détecter un démarrage d'une phase de plasma peut comprendre l'un au moins parmi : une valeur seuil de température interne du Tokamak, un signal de commande électrique, une commande manuel d'un opérateur démarrant, ou tout autre moyen équivalent, une mesure de pression et/ou de courant et/ou de tension et/ou de champ magnétique.

Cette particularité avantageuse permet de détecter le démarrage de la phase de génération d'un plasma et d'exploiter la constante de temps de transfert de charge thermique entre le coeur du Tokamak (la zone de génération du plasma) et l'interface thermique du réfrigérateur (organe 1 à refroidir). De cette façon, l'installation tient compte de l'inertie du système pour anticiper le besoin accru de refroidissement avant qu'il ne se fasse ressentir au niveau de l'organe 1.

Grâce à l'invention, le changement de régime de puissance de réfrigération est ainsi effectué de sorte que cette puissance maximum du réfrigérateur est immédiatement disponible à l'arrivée de la charge thermique accrue.

De préférence, le changement de la puissance de réfrigération (par exemple adaptation des pressions et/ou débits de cycle) n'est pas brutal (pas de variation de type tout ou rien) mais selon un signal lissé, par exemple via des courbes au moins en partie lissées.

La figure 3 illustre ce fonctionnement : l'augmentation de la pression P de cycle (consigne de pression maximum PMAX pour augmenter la puissance de réfrigération du dispositif 2) en fonction du temps « t » précède le signal PA représentatif d'un plasma (pic de la courbe PA). Sur cette figure 3 est également représenté la courbe T1 représentant la variation de charge thermique qui appliquée par l'organe 1 sur la réserve 4 d'hélium liquide. C'est-à-dire que cette courbe de charge T1 reflète l'énergie de l'organe 1 à dissiper. Lorsque cette charge T1 de l'organe 1 est à nouveau sur une pente décroissante, la consigne de pression P peut être diminuée de façon optimale en respectant de préférence la même pente de décroissance jusqu'à atteindre la consigne de pression basse (pression minimum).

Selon ce fonctionnement, une puissance de réfrigération excédentaire peut être induite pendant un laps de temps court avant l'arrivée effective de la charge thermique accrue. Cette puissance de réfrigération excédentaire peut être régulée par un réchauffeur qui vaporise l'excédent de liquide produit ou via un système de by-pass froid qui renvoie une partie de l'hélium de la boîte de refroidissement vers la station de compression. Un tel système de by-pass froid est cependant facultatif. Néanmoins, les variations de pression et de débit du cycle sont lissées avantageusement, par l'utilisation concomitante de la vanne 30 de by-pass froid, du stockage à température ambiante, et de la consommation d'hélium liquide de la capacité 4 (un exemple de un principe de fonctionnement d'un tel by-pass froid est décrit dans le document WO2009/024705). Cette solution permet par ailleurs d'éviter la consommation énergétique non négligeable d'un réchauffeur, et de limiter judicieusement les amplitudes de variation de température de la boite froide.

L'utilisation du réchauffeur et/ou d'un by-pass froid permet d'utiliser l'éventuelle puissance de réfrigération excédentaire pour abaisser la température des échangeurs de chaleur de la boîte 32 de refroidissement. Ceci permet de réduire le débit dans les turbines des étages de la boîte 32 de refroidissement.

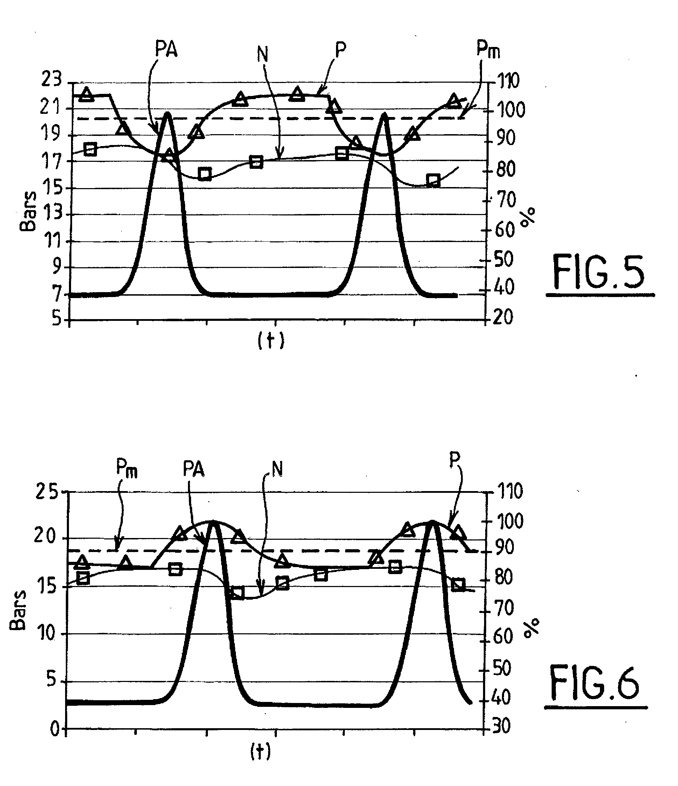

Les figures 5 et 6 permettent de mettre en évidence des avantages de l'invention par rapport à l'art antérieur.

Chaque figure représente, sur un même graphique, les variations en fonction du temps t : de la pression de cycle P, de la pression moyenne de cycle Pm, du niveau N d'hélium liquide dans la réserve de liquide, pour une installation subissant deux phases plasma successives (deux pics successifs). La figure 5 illustre un fonctionnement selon l'art antérieur (augmentation de la pression de cycle en fonction de la variation de la courbe de chauffe du réchauffeur). La figure 6 illustre un fonctionnement selon l'invention (augmentation de pression de cycle en réponse à signal S produit lors d'une étape de démarrage d'une génération d'un plasma dans le Tokamak).

La comparaison de ces courbes illustre que l'invention permet de réduite significativement (de l'ordre de 10%) la pression moyenne de fonctionnement de la station 12 de compression de l'installation.

L'invention permet ainsi de réduire la consommation énergétique globale de l'installation au fur et à mesure de l'enchaînement des plasmas.

Les inventeurs ont ainsi constaté que, selon l'art antérieur, lorsque seule la « courbe de chauffe » de réchauffeur est utilisée, les changements de régime de puissance de réfrigération du dispositif 2 sont en retard par rapport à la charge thermique d'un plasma. L'invention permet d'améliorer la concordance entre la puissance de réfrigération du dispositif 2 et les besoins en réfrigération. Ceci est obtenu tout en diminuant
- la consommation d'hélium liquide (cf. niveau de liquide N figures 5 et 6) et
- la consommation énergétique de la station de compression (cf. ci-dessus).

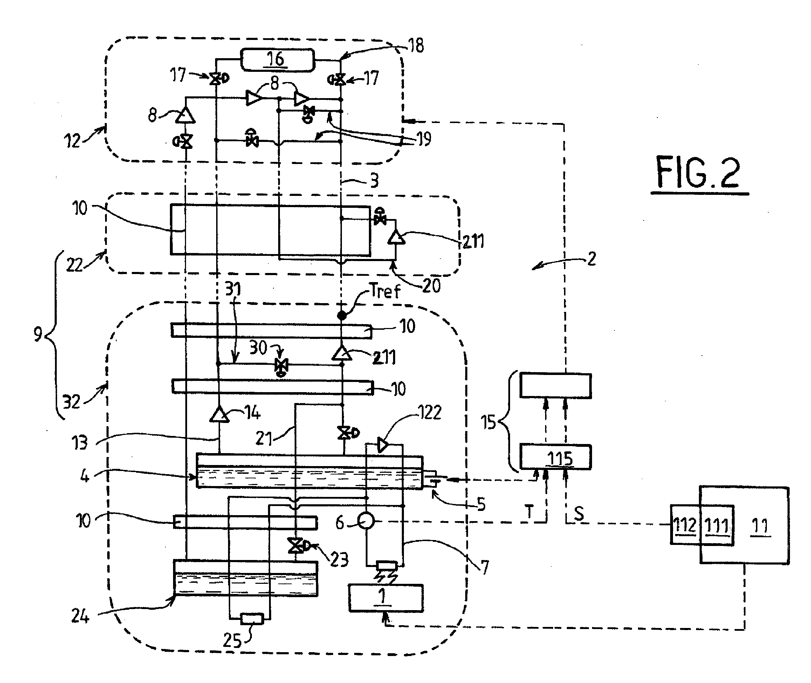

La figure 2 illustre l'application de l'invention à un exemple particulier de réfrigérateur 2 (exemple non imitatif).

La station 12 de compression de l'installation de la figure 2 comprend trois compresseurs 8.

Comme représenté, la station 12 de compression peut comprendre une conduite 18 de dérivation vers un stockage 16 tampon. Un système de vannes 17 permet de réguler le transfert d'hélium entre le circuit de travail et le stockage 16 tampon. De même, classiquement des conduites 19 munie de vannes respectives peuvent être prévue pour assurer des retours sélectifs d'hélium compressé à certains étages de compression.

A la sortie de la station 12 de compression, l'hélium est admis dans une boîte 22 de pré-refroidissement dans laquelle l'hélium est refroidi par échange thermique avec un ou plusieurs échangeurs 10 et éventuellement détendu dans des turbines. Une conduite 20 munie d'une vanne peut être prévue pour renvoyer sélectivement de l'hélium dans la station 12 de compression.

L'hélium est ensuite admis dans une boîte de refroidissement. L'hélium est refroidi par échange thermique avec un ou plusieurs échangeurs 10 et éventuellement détendu dans un ou des turbines 211. Comme expliqué précédemment, une conduite 31 de by-pass froid munie d'une vanne 30 peut être prévue pour renvoyer de l'hélium détendu vers la station 12 de compression.

L'hélium liquéfié est principalement stocké dans une réserve 4. Cette réserve 4 d'hélium liquide constitue une réserve de frigories destinée à échanger thermiquement avec l'organe 1 à refroidir. Le refroidissement est réalisé par exemple via un circuit 7 en boucle et muni d'une pompe 122.

Comme représenté, une partie de l'hélium liquéfié peut être prélevée en amont de la réserve 4 (conduite de dérivation 21 et vanne 23) pour alimenter un autre réservoir formant une réserve 24 auxiliaire. La réserve auxiliaire d'hélium liquide (qui est facultative) peut être prévue pour être utilisée dans un système 25 de pompage cryogénique de l'installation (ou pour refroidir toute autre charge thermique). Par exemple, le circuit de refroidissement de l'organe 1 peut comprendre une boucle de dérivation vers cette autre charge 25 thermique.

L'hélium réchauffé issu des réserves 4,24 est ensuite renvoyé vers la station 12 de compression. Lors du son retour l'hélium peut céder des frigories aux échangeurs 10 des boîtes de refroidissement 32 et de pré-refroidissement 22.

La logique 15 électronique (qui peut comprendre un microprocesseur) est reliée à la station de compression pour réguler la puissance de réfrigération. La logique 15 électronique est également est reliée au réchauffeur de la réserve 4 pour réguler le niveau d'hélium liquide dans cette dernière.

Selon l'invention, le Tokamak 11 comprend un capteur 111 mesurant la valeur d'un paramètre physique observable au niveau du Tokamak 11 et représentatif du démarrage d'un plasma. Le capteur 111 est relayé par un émetteur 112 qui envoie l'information à un récepteur 115 de la logique 15 électronique.

Avantageusement, un capteur 6 de température sur la boucle 7 de fluide qui circule entre le réfrigérateur et l'organe 1 informe également la logique 15 électronique. Lorsque cette température T mesurée décroît (c'est-à-dire que les besoins de réfrigération diminuent du fait de la fin de la phase de plasma), la logique 15 électronique commande la diminution de la consigne de puissance de réfrigération. Bien entendu, la fin de la phase de plasma peut être détectée par tout autre moyen par exemple via la courbe de chauffe du réchauffeur 5, via un paramètre au niveau du Tokamak, ou via d'autres observables internes au réfrigérateur comme par exemple les vitesses des turbines, ou les compresseurs froids. En effet, si'il est délibérément choisi de ne pas réguler les vitesses des turbines, celles-ci vont naturellement varier en fonction du besoin, et vont devenir des indicateurs de la charge thermique appliquée sur l'hélium liquide.

Ces deux paramètres (signal S de démarrage d'une phase de plasma et température de fin de phase de plasma) peuvent être utilisés dans schéma de contrôle dit en commande prédictive (« feed forward »). C'est-à-dire que l'un au moins parmi :
- la courbe de consigne de pression dans le cycle de travail,
- la courbe de commande de la fréquence d'un éventuel variateur de cycle (pour piloter le débit d'hélium dans le circuit de travail),
- le pilotage de l'ouverture du by-pass froid 30
peut être défini par un calculateur numérique, par exemple intégré dans la logique 15 électronique. Le calculateur numérique peut utiliser par exemple une simple fonction arithmétique paramétrable ou bien un modèle interne de prédiction d'état pour obtenir une régulation plus fine, en vue d'une consommation énergétique optimale.

La figure 4 illustre le fonctionnement lorsque l'installation possède un by-pass froid (cf. références 30, 31 figure 2). Lorsque le signal de déclenchement d'un plasma est reçu par le dispositif 2, 15, la consigne de pression P maximum est donnée à la station 12 de compression. A cet instant, le dispositif 2 de réfrigération est encore en mode de fonctionnement réduit, et la vanne 30 de by-pass froid est ouverte (la température de référence Tref croît, cf. la remontée du pourcentage d'ouverture de la vanne, courbe B).

Cette ouverture du by-pass froid limite la puissance du réfrigérateur. La pression réelle appliquée dans la station 12 de compression et les effets résultant dépendront de la méthode numérique de régulation employée pour piloter la station de compression. La régulation peut utiliser un modèle interne prédéfini, une commande du type « PID », des commandes multivariables de type LQR ou autre.

Lorsque la charge thermique augmente sur la réserve 4, la vanne 30 de by-pass froid est fermée. La température Tref du bypass décroît pour fournir le maximum de puissance de réfrigération à l'organe 1.

Une régulation optimale de la pression est obtenue. Ceci se traduit par une économie d'énergie significative.

## Revendications

1. Procédé de réfrigération en charge pulsée d'un organe (1) d'un « Tokamak» (11), c'est-à-dire un organe (1) d'une installation (11) de génération intermittente d'un plasma, le procédé utilisant un dispositif (2) de réfrigération soumettant un fluide de travail tel que de l'hélium à un cycle (3) de travail comportant: une compression (12), un refroidissement et une détente (22, 11), un échange thermique (32) avec l'organe (1), un réchauffement, la puissance de réfrigération produite par le dispositif (2) de réfrigération étant augmentée à un niveau relativement élevé lorsque le Tokamak (11) est dans une phase de génération d'un plasma tandis que la puissance de réfrigération produite par le dispositif (2) de réfrigération est diminuée à un niveau relativement bas lorsque le Tokamak (11) n'est plus dans une phase de génération d'un plasma, **caractérisé en ce que** l'augmentation de la puissance de réfrigération produite par le dispositif (2) de réfrigération est déclenchée automatiquement en réponse à un signal (S) produit lors d'une étape de démarrage d'un plasma dans le Tokamak.

2. Procédé selon la revendication 1, **caractérisé en ce que** le signal (S) est généré lors d'une modification prédéterminée d'un paramètre physique observable au niveau du Tokamak (11).

3. Procédé selon la revendication 1 ou 2, **caractérisé en ce que** le signal (S) est généré lors d'une modification prédéterminée de l'un au moins des paramètres physiques suivants : une augmentation prédéterminée de la température interne du Tokamak (11), un signal de commande manuel ou automatique de commutation du Tokamak dans une phase de génération d'un plasma, un signal électrique de mesure de pression et/ou de courant électrique et/ou de tension électrique et/ou de champ magnétique, ou un signal issu d'un d'instrument de mesure de type optique tel qu'une camera ou des fibres.

4. Procédé selon l'une quelconque des revendications 1 à 3, **caractérisé en ce que** lorsque le Tokamak (11) n'est plus dans une phase de génération d'un plasma, le procédé comporte au moins une période durant laquelle le dispositif (2) de réfrigération liquéfie du fluide de travail et stocke du fluide liquéfié dans une réserve (4) tampon, le niveau de fluide liquéfié dans une réserve (4) étant maintenu en dessous d'un seuil via un réchauffeur (5) sélectivement activable, et **en ce que** lors du démarrage d'une phase de plasma, l'augmentation de la puissance de réfrigération produite par le dispositif (2) de réfrigération intervient avant une désactivation du réchauffeur (5) et une baisse de niveau de liquide dans la réserve (4), c'est-à-dire que le signal de détection du démarrage d'une génération d'un plasma dans lé Tokamak est antérieur à une désactivation du réchauffeur (5) et une baisse de niveau de liquide dans la réserve (4) résultant d'une vaporisation de fluide du fait du refroidissement de l'organe (1) du Tokamak lors d'un plasma.

5. Procédé selon l'une quelconque des revendications 1 à 4, **caractérisé en ce que** la diminution de la puissance de réfrigération produite par le dispositif (2) de réfrigération à un niveau bas est déclenchée automatiquement en réponse à une variation déterminée de la charge thermique de l'organe (1), c'est-à-dire une variation déterminée du besoin de réfrigération de l'organe (1).

6. Procédé selon l'une quelconque des revendications 1 à 5, **caractérisé en ce que** la diminution de la puissance de réfrigération produite par le dispositif (2) de réfrigération est déclenchée automatiquement en réponse à l'un au moins parmi : un signal de détection d'une baisse déterminée de température (T) dans une boucle (7) de fluide assurant l'échange thermique entre l'organe (1) et le fluide de travail, une remontée de niveau dans un stockage d'hélium liquide, un seuil d'ouverture d'un by-pass froid, un seuil de vitesse de turbine ou de compresseur froid.

7. Procédé selon l'une quelconque des revendications 1 à 6, **caractérisé en ce que** l'augmentation ou la diminution de la puissance de réfrigération produite est réalisée en faisant varier le niveau d'au moins une pression de cycle du fluide de travail dans le cycle de travail et/ou en faisant varier la vitesse de rotation de compresseurs utilisés dans le cycle de travail, notamment lors de la compression.

8. Procédé selon l'une quelconque des revendications 1 à 7, **caractérisé en ce que** l'augmentation ou la diminution de la puissance de réfrigération produite est réalisée en faisant varier de façon directe ou indirecte la puissance électrique consommée par le dispositif de réfrigération.

9. Installation de réfrigération en charge pulsée d'un organe (1) d'un « Tokamak» (11), l'installation étant munie d'un dispositif (2) de réfrigération comprenant un circuit formant un cycle de travail pour un fluide de travail tel que l'hélium, le circuit du dispositif (2) de réfrigération comportant:
- une station (12) de compression du gaz de travail munie d'au moins un compresseur (8),
- une boîte de pré-refroidissement/refroidissement (9) comprenant au moins un échangeur (10) de chaleur et au moins un organe (211) de détente du gaz de travail sortant de la station (2) de compression,
- un système (4, 7, 12) d'échange thermique entre le fluide de travail refroidit et l'organe (1),
- un système (13, 14, 10) de renvoi du fluide ayant échangé thermiquement avec l'organe (1) vers la station (12) de compression,
l'installation comprenant une logique (15) électronique de pilotage du dispositif (2) de réfrigération assurant une régulation de la puissance de réfrigération produite par ledit dispositif (2) de réfrigération, pour augmenter ponctuellement cette puissance de réfrigération à un niveau relativement élevé lorsque le Tokamak (11) est dans une phase de génération d'un plasma, l'installation étant **caractérisée en ce que** le Tokamak (11) comprend un émetteur (112) d'un signal (S) de déclenchement à chaque démarrage d'une génération d'un plasma, la logique (15) électronique comprenant un récepteur dudit signal (S) de déclenchement pour commander automatiquement l'augmentation de la puissance de réfrigération produite par le dispositif (2) de réfrigération à la réception de ce signal (S).

10. Installation selon la revendication 9, **caractérisée en ce qu'**elle comprend un capteur (111) mesurant la valeur d'un paramètre physique observable au niveau du Tokamak (11) et représentatif du démarrage d'une génération d'un plasma, et **en ce que** ledit capteur (111) envoie une information à l'émetteur (112) en vue d'informer la logique (15) électronique de pilotage.

11. Installation selon la revendication 10, **caractérisée en ce que** le capteur (111) comprend au moins parmi: un capteur d'une température interne ou externe du Tokamak (11), un capteur de commutation de la commande manuel ou automatique de commutation du Tokamak d'une phase dite « de veille » vers une phase de génération d'un plasma, ou tout autre capteur électrique présent dans l'instrumentation du tokamak.

12. Installation selon l'une quelconque des revendications 9 à 11, **caractérisée en ce que** la boîte de pré-refroidissement/refroidissement (9) comprend une réserve (4) tampon de fluide liquéfié lors du cycle de travail, un réchauffeur (5) sélectivement activable pour vaporiser une partie du fluide liquéfié de la réserve (4), un circuit (7) d'échange thermique sélectif entre le fluide de la réserve (4) et l'organe (1), **en ce que** l'installation comporte un capteur (6) mesurant la charge thermique de l'organe (1), c'est-à-dire un capteur (6) mesurant la valeur d'une grandeur représentative du besoin de réfrigération de l'organe (1) à refroidir et **en ce que** le capteur (6) mesurant la charge thermique de l'organe (1) adresse un signal (T) à la logique (15) électronique de pilotage, ladite logique (15) électronique de pilotage étant programmée pour diminuer la puissance de réfrigération produite par le dispositif (2) de réfrigération à un niveau relativement bas en réponse à un signal (T) de détection d'une baisse déterminée de la charge thermique de l'organe (1).

13. Installation selon la revendication 12, **caractérisée en ce que** le capteur (6) mesurant la charge thermique de l'organe (1) comprend l'un au moins parmi : un capteur (6) de température (T) dans une boucle (7) de fluide assurant sélectivement l'échange thermique entre l'organe (1) et le fluide de travail, un capteur de pression, une mesure de puissance électrique des réchauffeurs, une mesure de vitesse de turbines et/ou de compresseurs froids.

14. Installation selon l'une quelconque des revendications 9 à 13, **caractérisé en ce que** la logique (15) électronique est configurée pour faire varier la puissance de réfrigération produite par le dispositif en contrôlant au moins le niveau d'une pression de cycle de fluide de travail dans le cycle de travail et/ou en contrôlant la vitesse de rotation de compresseurs utilisés dans le cycle de travail, notamment lors de la compression.

15. Installation selon l'une quelconque des revendications 9 à 14, **caractérisé en ce que** la logique (15) électronique est configurée pour réguler directement ou indirectement la puissance électrique consommée par le dispositif de réfrigération.

## Patentansprüche

1. Verfahren zum Abkühlen mit pulsierender Last eines Organs (1) eines "Tokamak" (11), das heißt, eines Organs (1) einer Anlage (11) zur intermittierenden Erzeugung eines Plasmas, wobei das Verfahren eine Abkühlvorrichtung (2) verwendet, die ein Arbeitsfluid, wie Helium, einem Arbeitszyklus (3) unterzieht, der Folgendes aufweist: eine Verdichtung (12), eine Abkühlung und eine Entspannung (22, 11), einen Wärmetausch (32) mit dem Organ (1), eine Erwärmung, wobei die durch die Abkühlvorrichtung (2) erzeugte Abkühlleistung auf ein relatives hohes Niveau erhöht wird, wenn der Tokamak (11) in einer Phase der Erzeugung eines Plasmas ist, während die durch die Abkühlvorrichtung (2) erzeugte Abkühlleistung auf ein relativ niedriges Niveau verringert wird, wenn der Tokamak (11) nicht mehr in einer Phase der Erzeugung eines Plasmas ist, **dadurch gekennzeichnet, dass** die Erhöhung der durch die Abkühlvorrichtung (2) erzeugten Abkühlleistung automatisch in Reaktion auf ein Signal (S) ausgelöst wird, das während eines Schritt des Starts eines Plasmas in dem Tokamak erzeugt wird.

2. Verfahren nach Anspruch 1, **dadurch gekennzeichnet, dass** das Signal (S) bei einer vorbestimmten Änderung eines physikalischen Parameters erzeugt wird, der im Bereich des Tokamak (11) beobachtbar ist.

3. Verfahren nach Anspruch 1 oder 2, **dadurch gekennzeichnet, dass** das Signal (S) bei einer vorbestimmten Änderung mindestens eines der folgenden physikalischen Parameter erzeugt wird: eine vorbestimmte Erhöhung der Innentemperatur des Tokamak (11), ein manuelles oder automatisches Steuersignal zum Umschalten des Tokamak in eine Phase der Erzeugung eines Plasmas, ein elektrisches Druck-Messsignal und/oder elektrisches Strom-Messsignal und/oder ein elektrisches Spannungs-Messsignal und/oder ein magnetisches Feld-Messsignal oder ein Signal, das von einem Messinstrument des optischen Typs wie eine Kamera oder Fasern stammt.

4. Verfahren nach einem der Ansprüche 1 bis 3, **dadurch gekennzeichnet, dass**, wenn der Tokamak (11) nicht mehr in einer Phase der Erzeugung eines Plasmas ist, das Verfahren mindestens einen Zeitraum aufweist, während dessen die Abkühlvorrichtung (2) das Arbeitsfluid verflüssigt und das verflüssigte Fluid in einem Pufferspeicher (4) bevorratet, wobei der Pegel des verflüssigten Fluids in einem Speicher (4) über eine selektiv aktivierbare Erwärmungseinrichtung (5) unterhalb eines Schwellwerts gehalten wird, und dass, während des Starts einer Plasmaphase, die Erhöhung der durch die Abkühlvorrichtung (2) erzeugten Abkühlungsleistung vor einer Deaktivierung der Erwärmungseinrichtung (5) und einer Absenkung des Flüssigkeitspegels in dem Speicher (4) erfolgt, das heißt, dass das Erkennungssignal des Starts einer Erzeugung eines Plasmas in dem Tokamak vor der Deaktivierung der Erwärmungseinrichtung (5) und einer Absenkung des Flüssigkeitspegels in dem Speicher (4) erfolgt, die aus einer Fluidverdampung aufgrund der Abkühlung des Organs (1) des Tokamak bei einem Plasma resultiert.

5. Verfahren nach einem der Ansprüche 1 bis 4, **dadurch gekennzeichnet, dass** die Verringerung der durch die Abkühlvorrichtung (2) erzeugten Abkühlungsleistung auf ein niedriges Niveau automatisch in Reaktion auf eine bestimmte Veränderung der thermischen Last des Organs (1) ausgelöst wird, das heißt, eine bestimmte Veränderung des Abkühlbedarfs des Organs (1).

6. Verfahren nach einem der Ansprüche 1 bis 5, **dadurch gekennzeichnet, dass** die Verringerung der durch die Abkühlvorrichtung (2) erzeugten Abkühlungsleistung automatisch in Reaktion auf eines der Folgenden ausgelöst wird: ein Erkennungssignal einer bestimmten Abnahme der Temperatur (T) in einer Fluidschleife (7), die den Wärmetausch zwischen dem Organ (1) und dem Arbeitsfluid bewirkt, ein Pegelanstieg in einer Bevorratung flüssigen Heliums, ein Öffnungsschwellwert eines kalten Bypass, ein Schwellwert der Drehzahl einer Turbine oder eines Kältekompressors.

7. Verfahren nach einem der Ansprüche 1 bis 6, **dadurch gekennzeichnet, dass** die Erhöhung oder Verringerung der durch die Abkühlvorrichtung erzeugten Abkühlungsleistung erfolgt, indem der Pegel mindestens eines Zyklusdrucks des Arbeitsfluids in dem Arbeitszyklus verändert wird und/oder indem die Drehzahl der in dem Arbeitszyklus verwendeten Kompressoren, insbesondere bei der Verdichtung, verändert wird.

8. Verfahren nach einem der Ansprüche 1 bis 7, **dadurch gekennzeichnet, dass** die Erhöhung oder Verringerung der durch die Abkühlvorrichtung erzeugten Abkühlungsleistung erfolgt, indem die elektrische Leistung, die durch die Abkühlvorrichtung aufgenommen wird, direkt oder indirekt verändert wird.

9. Anlage zum Abkühlen mit pulsierender Last eines Organs (1) eines "Tokamak" (11), wobei die Anlage mit einer Abkühlvorrichtung (2) versehen ist, die einen Kreislauf umfasst, der einen Arbeitszyklus für ein Arbeitsfluid, wie Helium, bildet, wobei die Abkühlvorrichtung (2) Folgendes aufweist:
- eine Station (12) zum Verdichten des Arbeitsgases, die mit mindestens einem Kompressor (8) versehen ist,
- einen Vorkühl-/Abkühlkasten (9), der mindestens einen Wärmetauscher (10) und mindestens ein Organ (211) zum Entspannen des aus der Verdichtungsstation (2) austretenden Arbeitsgases umfasst,
- ein System (4, 7, 12) zum Wärmetausch zwischen dem abgekühlten Arbeitsfluid und dem Organ (1),
- ein System (13, 14, 10) zum Umlenken des Fluids, das mit dem Organ (1) Wärme getauscht hat, zu der Verdichtungsstation (12) hin,
wobei die Anlage eine elektronische Logik (15) zum Steuern der Abkühlvorrichtung (2) umfasst, die eine Regelung der durch die Abkühlvorrichtung (2) erzeugten Abkühlungsleistung bewirkt, um diese Abkühlungsleistung punktuell auf ein relativ hohes Niveau zu erhöhen, wenn der Tokamak (11) in einer Phase der Erzeugung eines Plasmas ist, wobei die Anlage **dadurch gekennzeichnet ist, dass** der Tokamak (11) einen Sender (112) für ein Auslösesignal (S) bei jedem Start einer Erzeugung eines Plasmas umfasst, wobei die elektronische Logik (15) einen Empfänger für das Auslösesignal (S) umfasst, um automatisch die Erhöhung der durch die Abkühlvorrichtung (2) erzeugten Abkühlungsleistung beim Empfangen dieses Signals (S) zu steuern.

10. Anlage nach Anspruch 9, **dadurch gekennzeichnet, dass** sie einen Sensor (111) zum Messen des Wertes eines physikalischen Parameters umfasst, der im Bereich des Tokamak (11) beobachtbar ist und für den Start einer Erzeugung eines Plasmas repräsentativ ist, und dass der Sensor (111) eine Information an den Sender (112) schickt, um die elektronische Steuerlogik (15) zu informieren.

11. Anlage nach Anspruch 10, **dadurch gekennzeichnet, dass** der Sensor (111) zumindest eines der Folgenden umfasst: einen Fühler für eine Innen- oder Außentemperatur des Tokamak (11), einen Schaltsensor für das manuelle oder automatische Steuern zum Umschalten des Tokamak aus einer so genannten "Wartephase" in eine Phase der Erzeugung eines Plasmas, oder jeden anderen elektrischen Geber, der in der instrumentellen Ausrüstung des Tokamak vorhanden ist.

12. Anlage nach einem der Ansprüche 9 bis 11, **dadurch gekennzeichnet, dass** der Vorkühl-/Abkühlkasten (9) einen Pufferspeicher (4) für das beim Arbeitszyklus verflüssigte Fluid, eine selektiv aktivierbare Erwärmungseinrichtung (5) zum Verdampfen eines Teils des verflüssigten Fluids des Speichers (4), einen Kreislauf (7) für den selektiven Wärmetausch zwischen dem Fluid des Speichers (4) und dem Organ (1) umfasst, dass die Anlage einen Sensor (6) zum Messen der thermischen Last des Organs (1) aufweist, das heißt, einen Sensor (6), der den Wert einer Größe misst, die für den Abkühlbedarf des abzukühlenden Organs (1) repräsentativ ist, und dass der Sensor (6) zum Messen der thermischen Last des Organs (1) ein Signal (T) an die elektronische Steuerlogik (15) adressiert, wobei die elektronische Steuerlogik (15) programmiert ist, um die durch die Abkühlvorrichtung (2) erzeugte Abkühlungsleistung auf ein relativ niedriges Niveau zu verringern in Reaktion auf ein Erkennungssignal (T) einer bestimmten Abnahme der thermischen Last des Organs (1).

13. Anlage nach Anspruch 12, **dadurch gekennzeichnet, dass** der Sensor (6) zum Messen der thermischen Last des Organs (1) mindestens eines der Folgenden umfasst: einen Geber (6) für die Temperatur (T) in einer Fluidschleife (7), die selektiv den Wärmetausch zwischen dem Organ (1) und dem Arbeitsfluid bewirkt, einen Drucksensor, eine Messung der elektrischen Leistung der Erwärmungseinrichtungen, eine Messung der Drehzahl der Turbinen und/oder der Kältekompressoren.

14. Anlage nach einem der Ansprüche 9 bis 13, **dadurch gekennzeichnet, dass** die elektronische Logik (15) konfiguriert ist, um die durch die Vorrichtung erzeugte Abkühlungsleistung zu verändern, indem mindestens der Pegel eines Zyklusdrucks des Arbeitsfluids in dem Arbeitszyklus verändert wird und/oder indem die Drehzahl der in dem Arbeitszyklus verwendeten Kompressoren, insbesondere bei der Verdichtung, gesteuert wird.

15. Anlage nach einem der Ansprüche 9 bis 14, **dadurch gekennzeichnet, dass** die elektronische Logik (15) konfiguriert ist, um die elektrische Leistung, die von der Abkühlvorrichtung aufgenommen wird, direkt oder indirekt zu regeln.

## Claims

1. Method for the pulsed load cooling of a component (1) of a "Tokamak" (11), that is to say a component (1) of an installation (11) for intermittently generating a plasma, said method using a cooling device (2) that subjects a working fluid such as helium to a working cycle (3) comprising: compression (12), cooling and expansion (22, 11), heat exchange (32) with said component (1) and reheating, with the cooling power produced by said cooling device (2) being increased to a relatively high level when said Tokamak (11) is in a plasma generation phase, whereas the cooling power produced by said cooling device (2) is reduced to a relatively low level when said Tokamak (11) is no longer in a plasma generation phase, **characterised in that** the increase in the cooling power produced by said cooling device (2) is automatically triggered in response to a signal (S) produced during a step of starting a plasma in said Tokamak.

2. Method according to claim 1, **characterised in that** said signal (S) is generated during a predetermined modification of a physical parameter that can be observed in the Tokamak (11).

3. Method according to either claim 1 or claim 2, **characterised in that** said signal (S) is generated during a predetermined modification of at least one of the following physical parameters: a predetermined increase of the internal temperature of said Tokamak (11), a manual or automatic control signal for switching said Tokamak to a plasma generation phase, an electrical signal for measuring pressure and/or electrical current and/or voltage and/or magnetic field or a signal coming from a measurement instrument of the optical type such as a camera or fibres.

4. Method according to any one of claims 1 to 3, **characterised in that** when said Tokamak (11) is no longer in a plasma generation phase, said method comprises at least one period during which said cooling device (2) liquefies working fluid and stores the liquefied fluid in a buffer reserve (4), with the level of liquefied fluid in a reserve (4) being kept below a threshold by way of a heater (5) that can be selectively activated, and **in that**, when a plasma phase is started, the increase in the cooling power produced by said cooling device (2) occurs before said heater (5) is deactivated and before the level of liquid in said reserve (4) decreases, that is to say the signal for detecting the start of the generation of a plasma in said Tokamak precedes the deactivation of said heater (5) and a decrease in the level of liquid in said reserve (4) resulting from fluid vaporisation due to the cooling of said component (1) of said Tokamak during plasma generation.

5. Method according to any one of claims 1 to 4, **characterised in that** the reduction of the cooling power produced by said cooling device (2) to a low level is automatically triggered in response to a determined variation of the thermal load of said component (1), that is to say a determined variation of the cooling requirement of said component (1).

6. Method according to any one of claims 1 to 5, **characterised in that** the reduction in the cooling power produced by said cooling device (2) is automatically triggered in response to at least one of the following: a signal for detecting a determined drop in temperature (T) in a fluid circuit (7) providing the heat exchange between said component (1) and the working fluid, an increase in the level of liquid helium in a storage tank, an opening threshold of a cold bypass, a turbine threshold speed or cold compressor threshold speed.

7. Method according to any one of claims 1 to 6, **characterised in that** the increase or the reduction of the cooling power produced is achieved by varying the level of at least one pressure cycle of the working fluid in the working cycle and/or by varying the rotation speed of compressors used in the working cycle, particularly during compression.

8. Method according to any one of claims 1 to 7, **characterised in that** the increase or the reduction of the cooling power produced is achieved by directly or indirectly varying the electrical power consumed by said cooling device.

9. Installation for the pulsed load cooling of a component (1) of a "Tokamak" (11), said installation being equipped with a cooling device (2) comprising a circuit forming a working cycle for a working fluid such as helium, said circuit of said cooling device (2) comprising:
- a working gas compression station (12) equipped with at least one compressor (8);
- a pre-cooling/cooling unit (9) comprising at least one heat exchanger (10) and at least one component (211) for expanding the working gas exiting said compression station (2);
- a system (4, 7, 12) for exchanging heat between the cooled working fluid and said component (1);
- a system (13, 14, 10) for returning fluid that has been thermally exchanged with said component (1) to said compression station (12);
said installation comprising electronic logic (15) for controlling said cooling device (2) ensuring regulation of the cooling power produced by said cooling device (2), so as to temporarily increase this cooling power to a relatively high level when said Tokamak (11) is in a plasma generation phase, said installation being **characterised in that** said Tokamak (11) comprises a transmitter (112) that transmits a triggering signal (S) each time a plasma generation is started, said electronic logic (15) comprising a receiver that receives said triggering signal (S) so as to automatically control the increase in the cooling power produced by said cooling device (2) upon reception of said signal (S).

10. Installation according to claim 9, **characterised in that** it comprises a sensor (111) that measures the value of a physical parameter that can be observed in the Tokamak (11) and represents the start of a plasma generation, and **in that** said sensor (111) sends information to said transmitter (112) with a view to notifying said electronic control logic (15).

11. Installation according to claim 10, **characterised in that** said sensor (111) comprises at least one of the following: a sensor for sensing the internal or external temperature of said Tokamak (11), a sensor for switching the manual or automatic switching command of said Tokamak from a "standby" phase to a plasma generation phase, or any other electrical sensor present in the instrumentation of said Tokamak.

12. Installation according to any one of claims 9 to 11, **characterised in that** said pre-cooling/cooling unit (9) comprises a buffer reserve (4) of fluid liquefied during the working cycle, a heater (5) that can be selectively activated so as to vaporise some of the liquefied fluid of said reserve (4), a circuit (7) for selectively exchanging heat between the fluid of said reserve (4) and said component (1), **in that** said installation comprises a sensor (6) that measures the thermal load of said component (1), that is to say a sensor (6) measuring the value of a magnitude representing the cooling requirement of said component (1) to be cooled, and **in that** said sensor (6) measuring the thermal load of said component (1) delivers a signal (T) to said electronic control logic (15), said electronic control logic (15) being programmed to reduce the cooling power produced by said cooling device (2) to a relatively low level in response to a signal (T) for detecting a determined reduction of the thermal load of said component (1).

13. Installation according to claim 12, **characterised in that** said sensor (6) measuring the thermal load of said component (1) comprises at least one of the following: a sensor (6) for sensing the temperature (T) in a fluid circuit (7) selectively ensuring heat exchange between said component (1) and the working fluid, a pressure sensor, a measurement of the electrical power of the heaters, a measurement of the speed of turbines and/or of cold compressors.

14. Installation according to any one of claims 9 to 13, **characterised in that** said electronic logic (15) is configured to vary the cooling power produced by said device by controlling at least the level of a working fluid pressure cycle in the working cycle and/or by controlling the rotational speed of compressors used in the working cycle, particularly during compression.

15. Installation according to any one of claims 9 to 14, **characterised in that** said electronic logic (15) is configured to directly or indirectly regulate the electrical power consumed by said cooling device.
